# EUROPEAN PATENT SPECIFICATION

(11) **EP 0 398 860 B1**
(45) Date of publication and mention of the grant of the patent: **13.09.1995**
(21) Application number: 90870072.7
(22) Date of filing: 14.05.1990
(51) Int. Cl.: B01F 17/00, C02F 1/68

(54) **Dispersant compositions for treating oil slicks on cold water**
Dispergiermittelgemische für die Behandlung von Ölflecken auf kaltem Wasser
Compositions dispersantes pour le traitement des nappes d'huile sur l'eau froide

(30) Priority: 15.05.1989 US 351985
(43) Date of publication of application: 22.11.1990
(73) Proprietor: FINA RESEARCH S.A., B-7181 Seneffe (Feluy) (BE)
(72) Inventor: Charlier, Alain, B-1900 Overijse (BE)

(56) References cited:
- EP-A- 0 106 526
- EP-A- 0 254 704
- FR-A- 2 515 062

## Description

This invention relates to dispersant compositions for treating oil slicks on water, more particularly on cold water.

Pollution of seawater by oil (including crude oil or fractions of crude oil) caused by accidents, off-shore drilling operations, discharge of ballast water or spillage from oil tankers, results in the formation of a continuous film or slick of oil which tends to spread. This oily film is prejudicial because it constitutes a barrier to the transfer of air and light from the atmosphere which are indispensable to support marine life.

The more generally employed method consists in treating the oil film with surface-active agents which disintegrate the cohesive oily film into droplets and disperse the droplets into the water column to a depth of several meters under the sea surface. The film is thus broken and there is again a transfer of air and light from the atmosphere. Moreover, the dispersion of the oil into droplets makes easier the biodegradation by marine micro-organisms.

Some surface-active agents are highly effective as oil slicks dispersants, but their use has resulted in severe damage to marine life because they are too toxic towards aquatic flora and fauna. Other surface-active agents are less toxic, but they are hardly effective as oil dispersants in seawater. In fact, they are too quickly washed out by the water from the oil slick on which they are sprayed, with the result that the oil droplets coalesce, re-agglomerate and again form a slick.

Surface-active agents are generally used in admixture with a solvent, particularly a solvent having a low toxicity, such as paraffinic and cycloparaffinic hydrocarbons or alcohols. Incorporation of a solvent presents many advantages : it decreases the pour point of the composition, it reduces the viscosity of the oil to be treated, it acts as a diluent for the surface-active agent which is more readily and uniformly distributed into the oil slick, and it therefore reduces the time required to mix the dispersant agent and the oil.

Another problem which arises from the use of surface-active agents as oil slicks dispersants is their water-solubility. Some of these agents dissolve too quickly in water and thus do not penetrate the oil slick. For this reason, it has been suggested to use dispersant compositions containing at least two surface-active agents. Better dispersion results from the use of blends of surface-active agent whose proportions are selected so that the hydrophilic-lipophilic balance (or HLB) falls between defined limits.

The trend therefore is to use blends of surface-active agents in admixture with a solvent. British Patent n° 1,404,684 describes such a composition in which the dispersant comprises a blend of a fatty acid polyalkylene glycol ester and a fatty acid sorbitan ester (HLB of the blend : from 9 to 10.5), dissolved in a hydrocarbon solvent containing less than 3 weight percent of aromatics. The solution may contain from 5 to 50 weight percent of the surface-active compounds blend, a proportion of 8 to 20 weight percent being generally preferred. Other patents describe the use of compositions comprising a fatty acid sorbitan monoester and a reaction product from the polycondensation of alkylene oxide on such monoester (British Patent 1,255,394) or comprising these compounds in admixture with 25 to 35 weight percent (calculated as dry matter) of a 75% aqueous solution of dialkyl sulfosuccinate salt (U.S. Patent 3,793,218). The best results are obtained with formulations containing about 40 percent of this blend of surface-active agents and about 60 percent of an isoparaffinic hydrocarbon as solvent.

European Patent n° 254.704 discloses compositions essentially containing a mixture of surface-active agents in a mixture of 40-50 weight percent (wt%) water and 60-50 wt% hydrocarbon solvent, said compositions being characterized by the fact that the mixture of surface-active agents comprise 55 to 65 weight percent of emulsifying agents consisting of a blend A of sorbitan monooleate and sorbitan monooleate polyoxyethylene derivative, said blend A having an HLB comprised between about 8.75 and 9.5, and a blend B consisting of sorbitan trioleate and sorbitan monooleate polyoxyethylene derivative, said blend B having an HLB comprised between about 8 and 10, wherein the weight ratio of said blend A to said blend B is between about 0.5/1 and 4/1; and 45 to 35 weight percent of sodium dioctylsulfosuccinate as wetting agent, said percentage being calculated on the weight of dry substance. These compositions are effective for dispersing oil slicks in mild climate, as well on calm sea as on rough sea.

However, the increasing production of oil in cold areas has evidenced that the presently known dispersant compositions are not adequate for treating oil spills on seawater in a cold environment.

There is thus a need for improved dispersant compositions whose effectiveness is not affected by a cold environment.

The object of this invention is to provide dispersant compositions for treating oil slicks on seawater in a cold environment, said new and improved compositions fulfilling the following conditions :
- to have a high content in surface-active agents,
- to have a both fast and also long-lasting dispersion action,
- to be effective as well on calm sea (low energy mixing) as on rough sea,
- to exhibit an effectiveness which does not depend on a critical HLB,
- to be a homogeneous and limpid liquid, free from insoluble matter,
- to have an adequate viscosity, allowing the composition to be sprayed from boats or from aircrafts,
- to be non-toxic and biodegradable,
- to be easily manufactured at low cost.

The dispersant compositions of the present invention essentially contain a mixture of surface-active agents comprising 55 to 65 weight percent of emulsifying agents consisting of a blend A of sorbitan monooleate and sorbitan monooleate polyoxyethylene derivative, said blend A having an HLB comprised between about 8.75 and 9.5, and a blend B consisting of sorbitan trioleate and sorbitan monooleate polyoxyethylene derivative, said blend B having an HLB comprised between about 8 and 10, wherein the weight ratio of said blend A to said blend B is between about 0.5/1 and 4/1, and 45 to 35 weight percent of sodium dioctylsulfosuccinate as wetting agent, said percentage being calculated on the weight of dry substance, and a mixture of water and solvents, said compositions being characterized by the fact that they comprise essentially :
- from 50 to 60 wt% of said mixture of surface-active agents,
- from 10 to 20 wt% of water,
- from 15 to 25 wt% of one or more hydrocarbon solvents, and
- from 10 to 20 wt% of one or more glycol ethers of general formula HO - (CₘH₂ₘ-O)ₓ - CₙH₂ₙ₊₁
   with m = 2-3, x = 1-3 and n = 1-6.

Those compositions are very effective for dispersing oil slicks in cold climates, even on calm sea. Moreover, this effectiveness occurs not long after application of the composition on the oil slick. These improvements result from a judicious selection of the components of the composition and of their proportions.

One of the emulsifying agents used in these compositions is sorbitan monooleate. Other sorbitan monoesters of fatty acids, saturated or not, containing from 10 to 20 carbon atoms, may be used. The selection of the monoester depends upon many factors, such as availability, price, purity and, for these reasons, sorbitan monooleate is preferably used.

The blend A of emulsifying agents comprises said sorbitan monooleate and oxyethylene derivative of said monoester, the latter being for instance the product resulting from the condensation of about 20 moles of ethylene oxide on the monoester.

The proportions of these components in blend A are such that the HLB of the mixture is of from about 8.75 to 9.25. The HLB values of surface-active agents and the methods for determining these values are given in the literature (see for instance : Encyclopedia of Chemical Technology, by Kirk-Othmer, 3rd edition, vol. 8, pp. 910-916). The HLB of sorbitan monooleate is 4.3 and the HLB of its 20 moles ethylene oxide derivative is 15. The HLB value of a mixture of components is calculated from the weight percentage and the HLB of each component. In the case of blend A, respective proportions of the components are such that the HLB value is of the order of from about 8.75 to about 9.5. The dispersing effectiveness of the compositions of this invention largely depends on the HLB of each emulsifying blend. According to a preferred embodiment of this invention, the HLB of the blend A of emulsifying agents will be comprised between 9 and 9.25.

The blend B of emulsifying agents comprises sorbitan trioleate (HLB = 1.8) and oxyethylenated sorbitan monooleate, the latter being more particularly the 20 ethylene oxide moles; the HLB of said blend B is of the order of about 8 to 10. Particularly suitable results were obtained by using dispersant compositions of this invention wherein blend B of emulsifying agents has an HLB comprised between about 8.5 and about 9.5.

The weight ratio of blend A to blend B of emulsifying agents of the invention may vary between wide limits and it may be comprised between about 0.5/1 and 4/1. The effectiveness of the compositions of this invention is particularly high, not only shortly after application of the composition on an oil slick, but also a few hours after this application, when said weight ratio is of the order of from 1.5/1 to 2.5/1.

The wetting agent is sodium dioctylsulfosuccinate, more precisely sodium di(ethyl-2-hexyl)sulfosuccinate, which is generally available as a solution (e.g. at 50% in dearomatized kerozene, which is preferably used, or at 75 % in a mixture of water and alcohol). Due to this wetting agent, the compositions of the invention are effective for dispersing oil slicks on seawater, even under weak agitation. To obtain this result, the wetting agent is generally used in such an amount that the weight ratio of emulsifying agents (blend A + blend B) to the wetting agent (calculated at anhydrous state) is of the order of from 65/35 to 55/45.

The selection of the solvent is an important feature of the present invention. Indeed dispersant compositions are generally diluted by seawater, e.g. at about 10 vol. %, before application by spraying from boats. However, the emulsion resulting from the dilution should be stable, else a breaking of the emulsion would occur. The active phase, containing the emulsifying agents and the wetting agent, would separate by decantation, as its specific gravity is higher than that of water. When applied on the oil slick, the active phase would pass through the oil film, more particularly when there is no agitation. Consequently, when sea is calm, the contact time between the oil and the emulsifying agents would be too short and said agents would not effectively work. Another requirement is that the dynamic viscosity of the compositions should not be too high at low temperatures; preferably, said viscosity should not exceed 250 mPa.s at 0°C while retaining all other advantageous properties. To satisfy those requirements, the compositions of this invention contain as solvent a ternary mixture of water, hydrocarbon solvent and glycol ether. As hydrocarbon solvent, there should preferably be selected a solvent with a low content in aromatic compounds, particularly a dearomatised kerosene containing less than 3% by weight, and preferably less than 1% by weight of aromatic compounds. As glycol ether, there may be used any one or more glycol ethers of general formula HO - (CₘH₂ₘ-O)ₓ - CₙH₂ₙ₊₁ with m = 2-3, x = 1-3 and n = 1-6. The most preferred glycol ether is dipropyleneglycol methyl ether (or DPGME, wherein m = 3, x = 2, and n = 1), because of its low ecotoxicity.

As alternatives for the glycol ethers in the present compositions, there should be used a compound that has a flash point above 60°C for safety reasons and that is compatible (i.e., totally miscible) with the water/hydrocarbon mixture. Examples of such compounds include alcohols that meet the stated requirements such as n-octanol and 2-ethylhexanol; ketones that meet the stated requirements such as cyclohexanone; glycols that meet the stated requirements such as propylene glycol and ethylene glycol; and esters that meet the stated requirements such as 2-ethylhexyl acetate. However, none of these alternatives provides a composition having both an adequate viscosity and a sufficient efficiency.

The compositions of this invention generally contain at least 50% by weight of surface-active agents (emulsifying agents and wetting agent), the rest being a mixture of water, glycol ethers and hydrocarbon solvents preferably in substantially the same weight percentage.

According to an embodiment of the invention, the compositions comprise :
30 to 35 % by weight of emulsifying agents consisting of a blend A and a blend B (as hereinbefore defined), the weight ratio blend A : blend B being comprised between 1.5/1 and 2.5/1;
20 to 23 % by weight of sodium dioctylsulfosuccinate as wetting agent;
the rest of the compositions comprising a mixture of about 15 wt% water, about 15 wt% of glycol ethers and about 15 wt% dearomatised kerosene.

The present invention will now be illustrated further by the following Examples which are not limiting it.

In these Examples, reference is made to a test method set up by the Institut Français du Pétrole (hereinafter referred to as the IFP method) for determining the effectiveness of dispersant compositions : the test is carried out with dilution and with a weak agitation produced by a beater acting on the water surface. The effectiveness is determined by the amount of oil which has been swept out of the system by a stream of water during a given period of time (Determination of the efficiency of dispersants during dynamic trials by dilution. Agreement of dispersants. Cedre R. 87.313.2 - November 1987). Chemical oil dispersion in trials at sea and laboratory test : the keyrole of dilution processes; Symposium on oil spill dispersants, 1982, American Society for Testing Materials).

In some examples, the method of the Warren Spring Laboratory (the WSL method) carried out under strong agitation was also used. The dispersant composition is added dropwise to a measured amount of oil floating on the surface of a column of seawater contained in a separating funnel. The funnel is then subjected to rotation. After a set time, the water column is allowed to stand at rest and the amount of oil which has been dispersed into the column is determined. The effectiveness of a dispersant is expressed in terms of the percentage of oil which has been dispersed into the aqueous phase (A specification for oil spill dispersants, Warren Spring Laboratory, Report n° LR 448-OP).

In the Examples, percentages are by weight.

### Example 1

A blend A of emulsifying agents having an HLB of 8.9 and being composed of sorbitan monooleate and sorbitan monooleate condensated with 20 moles ethylene oxide, was added to a blend B of emulsifying agents, having an HLB of 8.7 and being composed of sorbitan trioleate and sorbitan monooleate condensated with 20 moles ethylene oxide. The weight ratio blend A : blend B was of 1.9/1.

A dispersant composition was prepared with these emulsifying agents. The composition contained :
32 % blend A + blend B,
21 % sodium dioctylsulfosuccinate (based on dry salt),
24 % dearomatised kerosene,
13 % water.
10 % ethyleneglycol monobutylether (EGBE).

The effectiveness of this composition was determined by using the IFP method, the tested oil being a topped (at 150°C) Arabian crude oil. The dispersant composition was used in an amount of 0.2 ml for 5 ml of oil.

The results of the efficiency tests using the IFP method are given in Table 1, (expressed in % effectiveness after 60 minutes) along with the dynamic viscosity of the composition at 0°C (according to ASTM-D-445 standard method).

**Table 1**

| | Ex.1 | Ex.2 | Ex.3 | Units |
|---|---|---|---|---|
| Emulgators A+B | 32 | 32 | 32 | wt % |
| Wetting agent | 21 | 21 | 21 | wt % |
| Dearomatised kerosene | 24 | 24 | 24 | wt % |
| Water | 13 | 13 | 13 | wt % |
| EGBE | 10 | - | - | wt % |
| DEGBE | - | 10 | - | wt % |
| DPGME | - | - | 10 | wt % |
| Viscosity at 0°C | 243 | 275 | 306 | mPa.s |
| Dispersing efficiency | 80 | 79 | 78 | E₆₀ |

**Table 2**

| | A | B | C | D | E | Units |
|---|---|---|---|---|---|---|
| Emulgators A+B | 32 | 32 | 32 | 32 | 32 | wt % |
| Wetting agent | 21 | 21 | 21 | 21 | 21 | wt % |
| Dearomatised kerosene | 24 | 24 | 24 | 24 | 24 | wt % |
| Water | 13 | 13 | 13 | 13 | 13 | wt % |
| Propylene glycol | 10 | - | - | - | - | wt % |
| Hexylene glycol | - | 10 | - | - | - | wt % |
| Cyclohexanone | - | - | 10 | - | - | wt % |
| 2-ethylhexanol | - | - | - | 10 | - | wt % |
| 2-ethylhexylacetate | - | - | - | - | 10 | wt % |
| Viscosity at 0°C | 380 | 356 | 252 | 352 | 435 | mPa.s |
| Dispersing efficiency | 68 | 66 | 55 | 78 | 75 | E₆₀ |

### Examples 2 and 3, and comparative examples A to C

Several compositions were prepared and tested as in Example 1, by replacing EGBE by the same weight of diethyleneglycol monobutyl ether (DEGBE; example 2), dipropyleneglycol methyl ether (DPGME; example 3), propylene glycol (example A), hexylene glycol (example B), cyclohexanone (example C), 2-ethylhexanol (example D) or 2-ethylhexyl acetate (example E). The compositions and results are also given in Table 1 (examples 1-3) and in Table 2 (comparative examples).

These examples show that the best results are obtained with glycol ethers. Although the use of cyclohexanone may provide a composition having an acceptable vicosity at 0°C, the dispersion efficiency is markedly decreased.

### Examples 4 to 6

Example 3 was repeated with different water:hydrocarbon:glycol ether ratios. The compositions and results for examples 3 to 6 are given in Table 3.

These examples show that when DPGME is selected as sole glycol ether, a good dispersing efficiency and a dynamic viscosity of 250 mPa.s at 0°C may be obtained with compositions containing about 13 wt% of DPGME.

**Table 3**

| | Ex.3 | Ex.4 | Ex.5 | Ex.6 | Units |
|---|---|---|---|---|---|
| Emulgators A+B | 32 | 32 | 32 | 32 | wt % |
| Wetting agent | 21 | 21 | 21 | 21 | wt % |
| Dearomatised kerosene | 24 | 20 | 17 | 15 | wt % |
| Water | 13 | 15 | 15 | 15 | wt % |
| DPGME | 10 | 12 | 15 | 17 | wt % |
| Viscosity at 0°C | 306 | 265 | 222 | 200 | mPa.s |
| Dispersing efficiency | 78 | 80 | 78 | 77 | E₆₀ |

The efficiency of the dispersant of example 6 was also evaluated by the WSL method using 5 ml of medium fuel oil and 0.2 ml of dispersant. With pure dispersant, the efficiency was of 92%, while it was of 75% when the dispersant was prediluted in water (10 vol %).

### Comparative examples F to I

Composition F was prepared according to the disclosure of European Patent n° 254.704 and tested. It has a good dispersing efficiency (79%) but an excessive viscosity (573 mPa.s at 0°C). A modification of the water hydrocarbon ratio does not enable to obtain appropriate viscosities, as evidenced by examples G to I (Table 4).

The efficiency of the dispersant of example F was also evaluated by the WSL method using 5 ml of medium fuel oil and 0.2 ml of dispersant. With pure dispersant, the efficiency was of 89%, while it was of 63% only when it was prediluted in water (10 vol %).

**Table 4**

| | F | G | H | I | Units |
|---|---|---|---|---|---|
| Emulgators A+B | 32 | 32 | 32 | 32 | wt % |
| Wetting agent | 21 | 21 | 21 | 21 | wt % |
| Dearomatised kerosene | 24 | 32 | 47 | 13 | wt % |
| Water | 23 | 15 | 0 | 34 | wt % |
| Viscosity at 0°C | 573 | 623 | 1600 | 568 | mPa.s |
| Dispersing efficiency | 79 | 73 | 71 | 75 | E₆₀ |

## Claims

1. Dispersing compositions for the treatment of oil slicks on cold water, said compositions containing essentially a mixture of surface-active agents comprising 55 to 65 weight percent of emulsifying agents consisting of a blend A of (i) sorbitan monooleate and/or other sorbitan monoesters of fatty acids, saturated or not, containing from 10 to 20 carbon atoms and (ii) sorbitan monooleate polyoxyethylene derivative, said blend A having an HLB comprised between about 8.75 and 9.5, and a blend B consisting of sorbitan trioleate and sorbitan monooleate polyoxyethylene derivative, said blend B having and HLB comprised between about 8 and 10, wherein the weight ratio of said blend A to said blend B is between about 0.5/1 and 4/1, and 45 to 35 weight percent of sodium dioctylsulfosuccinate as wetting agent, said percentage being calculated on the weight of dry substance, and a mixture of water and solvents, said compositions being characterized by the fact that they comprise essentially :
- from 50 to 60 wt% of said mixture of surface-active agents;
- from 10 to 20 wt% of water;
- from 15 to 25 wt% of one or more hydrocarbon solvents, and
- from 10 to 20 wt% of one or more glycol ethers of general formula HO - (CₘH₂ₘ-O)ₓ - CₙH₂ₙ₊₁
with m = 2-3, x = 1-3 and n = 1-6.

2. Dispersing compositions according to claim 1, wherein the glycol ether is dipropylene glycol methyl ether.

3. Dispersing compositions according to either of claim 1 and 2, wherein the hydrocarbon solvent is dearomatized kerozene.

4. Dispersing compositions according to any one of claims 1 to 3, wherein component (i) of blend A consists of sorbitan monooleate or of other sorbitan monoesters of fatty acids, saturated or not, containing from 10 to 20 carbon atoms.

5. Dispersing compositions according to any one of claims 1 to 4, wherein the polyoxyethylene derivatives result from the condensation of about 20 moles ethylene oxide on the monoester.

6. Dispersing compositions according to any one of claims 1 to 5, wherein blend A has an HLB comprised between about 9 and 9.25.

7. Dispersing compositions according to any one of claims 1 to 6, wherein blend B has an HLB comprised between about 8.5 and 9.5.

8. Dispersing compositions according to any one of claims 1 to 7, wherein the weight ratio of blend A to blend B is between about 1.5/1 and 2.5/1.

## Patentansprüche

1. Dispergierzusammensetzungen zur Behandlung von Öllachen auf kaltem Wasser, wobei die Zusammensetzungen im wesentlichen ein Gemisch von oberflächenaktiven Mitteln, umfassend 55 bis 65 Gew.-% Emulgiermittel, die aus einem Gemisch A aus (i) Sorbitanmonooleat und/oder anderen Sorbitanmonoestern von gesättigten oder ungesättigten Fettsäuren, die 10 bis 20 Kohlenstoffatome enthalten, und (ii) einem Sorbitanmonooleatpolyoxyethylenderivat, wobei das Gemisch A einen HLB-Wert zwischen etwa 8,75 und 9,5 aufweist, und einem Gemisch B bestehen, das aus Sorbitantrioleat und einem Sorbitanmonooleatpolyoxyethylenderivat besteht, wobei das Gemisch B einen HLB-Wert zwischen etwa 8 und 10 aufweist, worin das Gewichtsverhältnis des Gemisches A zu dem Gemisch B zwischen etwa 0,5/1 und 4/1 liegt, und 45 bis 35 Gew.-% Natriumdioctylsulfosuccinat als Netzmittel, wobei die Prozente nach Gewicht der Trockensubstanz berechnet wurden, und ein Gemisch aus Wasser und Lösungsmitteln enthalten, wobei die Zusammensetzungen dadurch charakterisiert sind, daß sie im wesentlichen folgendes umfassen:
- von 50 bis 60 Gew.-% des Gemisches von oberflächenaktiven Mitteln;
- von 10 bis 20 Gew.-% Wasser;
- von 15 bis 25 Gew.-% von einem oder mehreren Kohlenwasserstofflösungsmitteln, und
- von 10 bis 20 Gew.-% von einem oder mehreren Glykolethern der allgemeinen Formel HO-(CₘH₂ₘ-O)ₓ - CₙH₂ₙ₊₁,
wobei m = 2-3, x = 1-3 und n = 1-6 ist.

2. Dispergierzusammensetzungen nach Anspruch 1, wobei der Glykolether Dipropylenglykolmethylether ist.

3. Dispergierzusammensetzungen nach einem der Ansprüche 1 und 2, wobei das Kohlenwasserstofflösungsmittel desaromatisiertes Kerosin ist.

4. Dispergierzusammensetzungen nach einem der Ansprüche 1 bis 3, wobei Komponente (i) von Gemisch A aus Sorbitanmonooleat oder aus anderen Sorbitanmonoestern von gesättigten oder ungesättigten Fettsäuren besteht, die 10 bis 20 Kohlenstoffatome enthalten.

5. Dispergierzusammensetzungen nach einem der Ansprüche 1 bis 4, wobei die Polyoxyethylenderivate durch die Kondensation von etwa 20 Mol Ethylenoxid mit dem Monoester entstehen.

6. Dispergierzusammensetzungen nach einem der Ansprüche 1 bis 5, wobei Gemisch A einen HLB-Wert zwischen etwa 9 und 9,25 aufweist.

7. Dispergierzusammensetzungen nach einem der Ansprüche 1 bis 6, wobei Gemisch B einen HLB-Wert zwischen etwa 8,5 und 9,5 aufweist.

8. Dispergierzusammensetzungen nach einem der Ansprüche 1 bis 7, wobei das Gewichtsverhältnis von Gemisch A zu Gemisch B zwischen etwa 1,5/1 und 2,5/1 liegt.

## Revendications

1. Compositions dispersantes pour le traitement de nappes d'huile sur l'eau froide, ces compositions contenant essentiellement un mélange d'agents de surface actifs comprenant de 55 à 65 pour cent en poids d'agents émulsifiants consistant en un mélange A de (i) monooléate de sorbitan et/ou d'autres monoesters de sorbitan et d'acides gras, saturés ou non, contenant de 10 à 20 atomes de carbone, et de (ii) dérivé polyoxyéthylène de monooléate de sorbitan, ce mélange A ayant un HLB compris entre environ 8,75 et 9,5, et un mélange B consistant en un trioléate de sorbitan et un dérivé polyoxyéthylène de monooléate de sorbitan, ce mélange B ayant un HLB compris entre environ 8 et 10, dans lequel le rapport en poids du dit mélange A au dit mélange B est compris entre environ 0,5/1 et 4/1; et de 45 à 35 pour cent en poids de dioctylsulfosuccinate de sodium comme agent mouillant, ce pourcentage étant calculé sur le poids de la substance sèche, et un mélange d'eau et de solvants, ces compositions étant caractérisées par le fait qu'elles comprennent essentiellement :
- de 50 à 60 %pds du dit mélange d'agents de surface actifs,
- de 10 à 20 %pds d'eau,
- de 15 à 25 %pds d'un ou plusieurs solvants hydrocarbonés, et
- de 10 à 20 %pds d'un ou plusieurs éthers de glycol de formule générale HO - (CₘH₂ₘ-O)ₓ - CₙH₂ₙ₊₁
avec m = 2-3, x = 1-3 et n = 1-6

2. Composition dispersante selon la revendication 1 dans laquelle l'éther de glycol est l'éther méthylique de dipropylèneglycol.

3. Composition dispersante selon l'une des revendications 1 ou 2 dans laquelle le solvant hydrocarboné est du kérosène désaromatisé.

4. Composition dispersante selon l'une quelconque des revendications 1 à 3 dans laquelle le composé (i) du mélange A consiste en du monooléate de sorbitan ou en d'autres monoesters de sorbitan et d'acides gras, saturés ou non, contenant de 10 à 20 atomes de carbone.

5. Composition dispersante selon l'une quelconque des revendications 1 à 4 dans laquelle les dérivés polyoxyéthylène résultent de la condensation d'environ 20 moles d'oxyde d'éthylène sur le monoester.

6. Composition dispersante selon l'une quelconque des revendications 1 à 5 dans laquelle le mélange A a un HLB compris entre environ 9 et 9,25.

7. Composition dispersante selon l'une quelconque des revendications 1 à 6 dans laquelle le mélange B a un HLB compris entre environ 8,5 et 9,5.

8. Composition dispersante selon l'une quelconque des revendications 1 à 7 dans laquelle le rapport en poids du mélange A au mélange B est compris entre environ 1,5/1 et 2,5/1.
